# FASCICULE DE BREVET EUROPEEN

(11) **EP 3 658 757 B1**
(45) Date de publication et mention de la délivrance du brevet: **05.01.2022**
(21) Numéro de dépôt: 18740878.6
(22) Date de dépôt: 24.07.2018
(51) Int. Cl.: F02B 29/04, F02M 31/04, F02M 31/08, F02M 31/083, F02M 31/093, F02M 31/10, F02M 31/14

(54) **PROCÉDÉ D'ENVOI D'AIR DE SURALIMENTATION DANS UN MOTEUR THERMIQUE**
VERFAHREN ZUM ZUFÜHREN VON LADELUFT IN EINE BRENNKRAFTMASCHINE
METHOD FOR SENDING CHARGE AIR INTO A COMBUSTION ENGINE

(30) Priorité: 26.07.2017 FR 1757111
(43) Date de publication de la demande: 03.06.2020
(73) Titulaire: Renault S.A.S., 92100 Boulogne-Billancourt (FR); Nissan Motor Co., Ltd., Yokohama-shi, Kanagawa 221-0023 (JP)
(72) Inventeur: MOKADDEM, Mohamed, 78180 Montigny Le Bretonneux (FR)
(74) Mandataire: Rougemont, Bernard
(86) Numéro de dépôt international: PCT/EP2018/070041
(87) Numéro de publication internationale: WO 2019/020628

(56) Documents cités:
- WO-A1-2011/120933
- FR-A1- 2 847 005
- FR-A1- 2 915 273
- FR-A1- 2 917 124
- FR-A1- 2 923 859
- FR-A1- 2 931 517
- FR-A1- 3 007 470

## Description

La présente invention concerne le domaine des moteurs, en particulier des moteurs thermiques associés à un compresseur, en particulier à un turbocompresseur.

Plus particulièrement, la présente invention concerne un procédé d'envoi d'air de suralimentation dans un moteur thermique permettant d'accélérer la montée en température de l'air de suralimentation envoyé dans le moteur.

Classiquement un compresseur, en particulier le compresseur d'un turbocompresseur, envoie de l'air sous pression, dit air de suralimentation, dans un moteur thermique afin de le suralimenter en comburant, le moteur thermique étant par ailleurs suralimenté en carburant. L'air en étant comprimé monte en température dans le turbocompresseur, à une température bien supérieure à la température optimale de combustion dans les cylindres.

Pour cette raison, il est connu de faire passer l'air de suralimentation dans un refroidisseur avant de le laisser entrer dans les cylindres. Il s'agit généralement d'un refroidisseur avec un échangeur thermique incorporant un circuit de liquide de refroidissement, généralement de l'eau, au contact du circuit d'air de suralimentation. Ce type de refroidisseur est généralement appelé refroidisseur d'air de suralimentation à eau.

Par exemple, FR 2847005 A1, FR 2917124 A1 et FR 3007470 A1 décrivent de tels dispositifs.

Une des difficultés apparait au démarrage à froid du moteur, en particulier lorsque le véhicule est dans un environnement où les températures sont très basses, par exemple inférieures ou égales à -10°C.

Dans un tel cas, il y a un délai relativement important, parfois de près de 4 minutes entre l'instant où la température en sortie du compresseur atteint une température voisine de celle de la température idéale de combustion et l'instant où la température d'admission, à l'entrée du moteur, atteint à son tour cette température idéale.

Même en diminuant le débit de la pompe auxiliaire assurant la circulation de l'eau dans le refroidisseur, voire en la coupant au démarrage, la demanderesse s'est aperçu que ce délai de réchauffage ne diminuait pas.

Cela est dû au fait que le refroidisseur comprend des masses métalliques importantes, qui au démarrage sont donc à la température de l'environnement du véhicule, si celui-ci est à l'arrêt depuis un certain temps. L'air comprimé est donc refroidi trop vite et cela jusqu'à ce que les masses métalliques du refroidisseur aient été suffisamment réchauffées par l'air suralimenté.

Par ailleurs, il en résulte également que l'humidité contenue dans l'air suralimenté va se condenser, générant ainsi un risque de corrosion et d'entrée d'eau dans le moteur.

Il a aussi été remarqué qu'au démarrage à froid, les systèmes de traitement visant à réduire le rejet de polluant, lesquels sont disposés le long de la ligne d'échappement d'un moteur à combustion interne, sont partiellement opérationnels de sorte qu'ils n'assurent pas un traitement dépolluant efficace durant le temps de montée en température du moteur.

Le problème technique que vise à résoudre l'invention est donc d'améliorer les conditions de démarrage d'un moteur thermique associé à un compresseur.

A cet effet, l'invention a pour objet un procédé d'envoi d'air de suralimentation dans un moteur thermique avec des cylindres, le moteur étant associé à un refroidisseur d'air de suralimentation provenant d'un compresseur, comprenant les étapes suivantes :
- une étape de préchauffage, dans laquelle au démarrage du moteur, la circulation de l'air de suralimentation au travers du refroidisseur est coupée et l'air de suralimentation est dirigé directement dans les cylindres du moteur, puis
- une étape de refroidissement, dans laquelle la circulation de l'air de suralimentation au travers du refroidisseur est rétablie, de manière à ce que l'air de suralimentation passe dans le refroidisseur avant d'entrer dans les cylindres,
- lors de l'étape de préchauffe, on amène au moins une partie des gaz de combustion sortant des cylindres (3) autour et/ou dans le refroidisseur (50), de manière à ce que ces gaz de combustion échangent des calories avec le refroidisseur,
- lors de l'étape de refroidissement, la circulation des gaz de combustion autour et/ou dans le refroidisseur (50) est interrompue.

Ainsi, au démarrage l'air suralimenté arrivant dans le moteur montera plus rapidement en température. On évite ainsi d'envoyer de l'eau condensée dans le moteur. Cela permet d'amener plus rapidement la température des masses métalliques du refroidisseur vers la température idéale de combustion.

Par ailleurs, la combustion sera plus rapidement efficace. Cela permet d'émettre moins d'oxydes d'azote.

Le procédé selon l'invention peut optionnellement présenter une ou plusieurs des caractéristiques suivantes :
- l'étape de refroidissement est mise en œuvre :
   - lorsque la température de l'air de suralimentation atteint ou dépasse une température de consigne, ou
   - au bout d'une durée de consigne à compter du démarrage du moteur ;
   cela permet d'établir une référence pour passer d'un circuit d'air à l'autre ;
- les gaz de combustion circulent autour et/ou dans le refroidisseur, puis rejoignent une portion basse pression d'un circuit d'échappement où la pression est moins élevée qu'en sortie des cylindres ; cela améliore l'échange thermique entre ces gaz et le refroidisseur.

L'invention a aussi pour objet un système d'envoi d'air de suralimentation dans un moteur thermique avec des cylindres pour la mise en œuvre d'un procédé selon l'invention.

Ce système comprend :
- un répartiteur de gaz d'un moteur thermique, comprenant des bouches de répartition destinées à être mises respectivement en communication aéraulique avec des cylindres correspondants d'un moteur,
- un premier circuit de circulation d'air de suralimentation débouchant dans les bouches de répartition,
- un deuxième circuit de circulation d'air de suralimentation débouchant dans les bouches de répartition, le deuxième circuit de circulation d'air étant distinct du premier circuit de circulation d'air,
- un refroidisseur d'air de suralimentation provenant d'un compresseur, ledit deuxième circuit d'air et le refroidisseur étant agencés de manière à échanger de la chaleur en amont des bouches de répartition, et ledit premier circuit d'air étant agencé à l'écart du refroidisseur,
- des moyens de sélection permettant d'ouvrir ou de fermer sélectivement l'arrivée d'air de suralimentation dans le premier circuit de circulation d'air ou dans le deuxième circuit de circulation d'air,
- un premier circuit de circulation de gaz de combustion distinct des circuits de circulation d'air, le premier circuit de circulation de gaz de combustion étant agencé de manière à échanger de la chaleur avec le refroidisseur,
- un deuxième circuit de circulation de gaz de combustion débouchant dans les bouches de répartition, le deuxième circuit de circulation de gaz de combustion étant distinct des circuits de circulation d'air et du premier circuit de circulation de gaz de combustion, le deuxième circuit de circulation de gaz de combustion étant à l'écart du refroidisseur.

Un tel système est ainsi adapté pour mettre en œuvre le procédé selon l'invention.

Le système selon l'invention peut optionnellement présenter une ou plusieurs des caractéristiques suivantes :
- le premier circuit de circulation de gaz rejoint en aval du refroidisseur une portion basse pression où la pression est moins élevée qu'en sortie des cylindres, par exemple dans une portion d'un circuit de gaz d'échappement, notamment en aval de la turbine d'un turbocompresseur ;
- il comprend des moyens de fermeture pour ouvrir ou fermer ledit premier circuit de circulation de gaz de combustion et des moyens de fermeture pour ouvrir ou fermer ledit deuxième circuit de circulation de gaz de combustion.

L'invention a pour objet également un répartiteur de gaz d'un moteur thermique, le répartiteur comprenant :
- des bouches de répartition destinées à être mises respectivement en communication aéraulique avec les cylindres correspondants d'un moteur,
- au moins une première entrée d'air de suralimentation,
- au moins une deuxième entrée d'air de suralimentation, distincte de la première entrée d'air,
- un premier chemin de circulation d'air reliant la première entrée d'air aux bouches de répartition.
- au moins une entrée de gaz de combustion, dite entrée de recirculation,
- un chemin de circulation de gaz de combustion, dit chemin de recirculation, reliant ladite entrée de recirculation aux bouches de répartition, le chemin de recirculation étant distinct du premier chemin de circulation d'air, l'entrée de recirculation étant distincte de la première et de la deuxième entrée d'air ;
- un refroidisseur d'air de suralimentation, ledit premier chemin de circulation d'air étant agencés à l'écart du refroidisseur ;
- un deuxième chemin de circulation d'air reliant ladite deuxième entrée d'air aux bouches de répartition et distinct dudit premier chemin de circulation d'air, ledit deuxième chemin de circulation d'air et le refroidisseur étant agencés de manière à échanger de la chaleur ; on a ainsi un dispositif davantage compact pour mettre en œuvre le procédé selon l'invention ;
- au moins une autre entrée de gaz de combustion, dite entrée de réchauffage ;
- un autre chemin de circulation de gaz de combustion, dit chemin de réchauffage, relié à l'entrée de réchauffage, le chemin de réchauffage et l'entrée de réchauffage étant distincts respectivement des chemin de circulation d'air et de leurs entrées d'air, le chemin de réchauffage étant agencé de manière à échanger de la chaleur avec le refroidisseur.

Un tel répartiteur est adapté à une mise en œuvre du procédé selon l'invention, dans laquelle le premier chemin de circulation d'air forme au moins une portion du premier circuit de circulation d'air, le deuxième circuit de circulation d'air pouvant lui être relié à la deuxième entrée d'air de suralimentation. Cela permet de simplifier la réalisation des deux circuits de circulation d'air et leur connexion aux cylindres.

Cela permet ainsi de réchauffer simplement le refroidisseur au démarrage, tout en améliorant davantage la compacité du dispositif.

Le deuxième circuit de circulation d'air peut soit être formé de différents éléments distincts du répartiteur et directement connectés à ce dernier, par exemple via des conduites, soit comprendre une portion intégrée au répartiteur.

Le répartiteur selon l'invention forme donc également un exemple de réalisation du répartiteur du système selon l'invention.

Le répartiteur selon l'invention peut optionnellement présenter une ou plusieurs des caractéristiques suivantes :
- le répartiteur comprend un bloc de répartition comprenant un premier conduit formant au moins une portion du premier chemin de circulation d'air et un deuxième conduit formant au moins une portion du chemin de recirculation ; cela permet une réalisation compact du répartiteur ; par exemple, le premier et le deuxième conduit peuvent être sensiblement parallèles ;
- le chemin de réchauffage comprend une sortie de gaz de combustion distincte des bouches de répartition ; cela permet de connecter le chemin de réchauffage non pas à l'entrée des cylindres mais dans un circuit de gaz d'échappement où la pression est moins élevée qu'en sortie des cylindres ;
- alternativement à l'alinéa précédent, le chemin de réchauffage comprend uniquement une entrée de gaz de combustion, de manière à ce que les gaz de combustion stagnent dans le chemin de réchauffage ;
- le refroidisseur comprend un carter et un circuit de refroidissement au contact du deuxième chemin de circulation d'air à l'intérieur du carter, le carter présentant des parois comprenant dans leur épaisseur au moins une partie du chemin de réchauffage ; cela permet de réchauffer plus rapidement l'ensemble du refroidisseur ;
- le carter délimite une cavité et dans lequel le circuit de refroidissement comprend des plaques dans lesquelles circule un fluide de refroidissement, les plaques étant agencées dans la cavité, la cavité étant reliée d'un côté à la deuxième entrée d'air et de l'autre aux bouches de répartition de manière à former au moins une partie du deuxième chemin de circulation d'air entre ces plaques ; c'est une forme compacte d'échangeur thermique ;
- la partie du chemin de réchauffage dans l'épaisseur des parois du carter est en communication aéraulique avec une portion basse pression située en aval du refroidisseur où la pression est moins élevée qu'en sortie des cylindres, par exemple dans une portion d'un circuit de gaz d'échappement, notamment en aval de la turbine d'un turbocompresseur.

Un autre objet de l'invention est un véhicule comprenant :
- un système selon l'invention,
- un compresseur connecté aux moyens de sélection de manière à envoyer à ces derniers l'air de suralimentation.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est un schéma d'un moteur relié à un turbocompresseur dans un véhicule selon l'art antérieur ;
- la figure 2 est une coupe d'un répartiteur selon l'art antérieur ;
- la figure 3 est un schéma d'un moteur relié à un système d'envoi d'air de suralimentation selon l'invention, à l'étape de préchauffage du procédé selon l'invention ;
- la figure 4 est un schéma d'un moteur relié à un système d'envoi d'air de suralimentation selon l'invention, à l'étape de refroidissement du procédé selon l'invention ;
- la figure 5 illustre une variante du système d'envoi d'air de suralimentation de la figure 3, à l'étape de préchauffage du procédé selon l'invention ;
- la figure 6 est une vue en perspective d'un répartiteur selon l'invention ;
- la figure 7 est une vue en coupe de la figure 6 selon le plan Π, avec les circulations de l'air de suralimentation et des gaz de combustion représentées lors de l'étape de préchauffage ;
- la figure 8 est la vue de la figure 7 mais avec les circulations de l'air de suralimentation et des gaz de combustion représentées lors de l'étape de refroidissement.

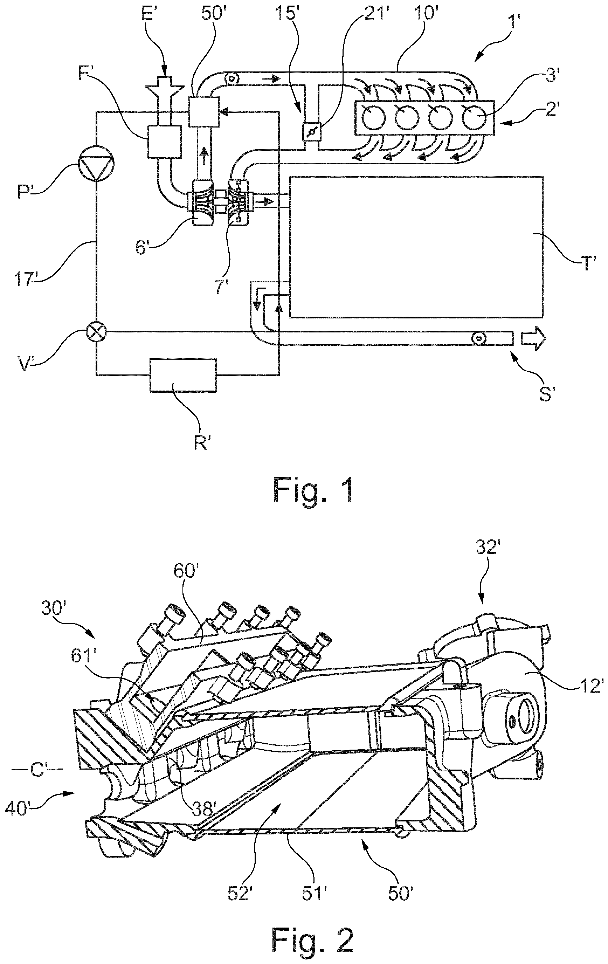

Les figures 1 et 2 illustrent l'art antérieur.

La figure 1 illustre un moteur 2' relié à un turbocompresseur par un système 1' d'envoi d'air de suralimentation.

Le turbocompresseur, comprend une turbine 7' reliée à un compresseur 6' connecté à une prise d'air extérieure E' au véhicule, via un filtre à air F'. Le compresseur 6' comprime l'air ainsi reçu et l'envoie dans les cylindres 3' du moteur thermique 2'. L'air en étant comprimé monte en température dans le compresseur 6'. Cet air chauffe alors et peut monter à plus de 230°C en sortie de compresseur 6', ce qui est bien au-dessus de la température optimale de combustion dans les cylindres.

Aussi afin de diminuer cette température en sortie du compresseur 6', l'air de suralimentation passe d'abord dans un refroidisseur 50' avant d'entrer dans les cylindres 3'. Le système 1' comprend ici un unique circuit de circulation d'air 10' de suralimentation connecté aux cylindres 3'.

Après combustion, les gaz de combustion expulsés des cylindres 3' sont aspirés par la turbine 7', qui les envoie vers un ensemble de traitement T', notamment pour éliminer les oxydes d'azote, pour être ensuite évacués vers la sortie d'échappement S'.

Pour diminuer davantage les émissions d'oxydes d'azote, le système 1' comprend un circuit de circulation de gaz de combustion 15', permettant la recirculation des gaz de combustion dans les cylindres 3'. Ce circuit de circulation de gaz de combustion 15' collecte ainsi les gaz en sortie de cylindres et les renvoie dans le circuit de circulation d'air 10'. Une vanne 21' permet de contrôler la quantité de gaz remis en circulation dans le moteur 2'.

Un circuit de refroidissement 17' permet de faire circuler de l'eau dans le refroidisseur 50', grâce à une pompe auxiliaire P'. L'eau de ce circuit de refroidissement 17' peut ensuite être refroidie par un radiateur R', dans lequel passe le circuit de refroidissement 17'. Il est également possible d'avoir une vanne V', permettant éventuellement de faire circuler une partie ou la totalité de l'eau hors du radiateur R', dans un conduit parallèle, pendant un certain temps.

Il est connu de l'art antérieur un répartiteur 30', tel qu'illustré en figure 2. Celui-ci comprend un bloc de répartition 60' destiné à répartie les gaz de combustion dans les cylindres 3' et un refroidisseur 50' destiné à répartir l'air de suralimentation dans les cylindres 3'.

Le répartiteur 30' comprend un côté de montage (à gauche en figure 2) destiné à être monté sur la culasse du moteur 2'. Ce côté de montage comprend des bouches de répartition 40' débouchant dans la zone C' où la culasse est destinée à être montée. Ces bouches de répartition 40' sont agencées pour être montées chacune en vis-à-vis d'un cylindre 3', en particulier d'une soupape d'admission, de manière à ce que tout gaz présent dans ces bouches de répartition 40' soit aspiré dans le cylindre correspondant, à l'ouverture de ses soupapes d'admission.

Le bloc de répartition 60' forme la terminaison du circuit de circulation des gaz de combustion, dont les sorties 61' débouchent dans les bouches de répartition 40'.

Le refroidisseur 50' comprend un carter 51' formant une cavité 52' recevant des tubes à plaques, non représentées dans lesquelles passe un liquide de refroidissement. Le carter 51' comprend une portion terminale du circuit de circulation de l'air 12', présentant une entrée 32' menant à l'intérieur du carter 51', où le circuit de circulation de l'air 12' se poursuit entre les plaques des tubes, jusqu'à des sorties 38' du carter 51' débouchant dans les bouches de répartition 40'. Ainsi, l'air de suralimentation est aspiré dans le cylindre 3' correspondant, à l'ouverture de ses soupapes d'admission.

Comme on peut le voir les masses métalliques formant le carter 51', mais aussi les plaques, sont assez importantes. Dans un environnement à moins de -10°C, celle-ci vont contribuer à un refroidissement trop rapide de l'air de suralimentation, comme exposé précédemment.

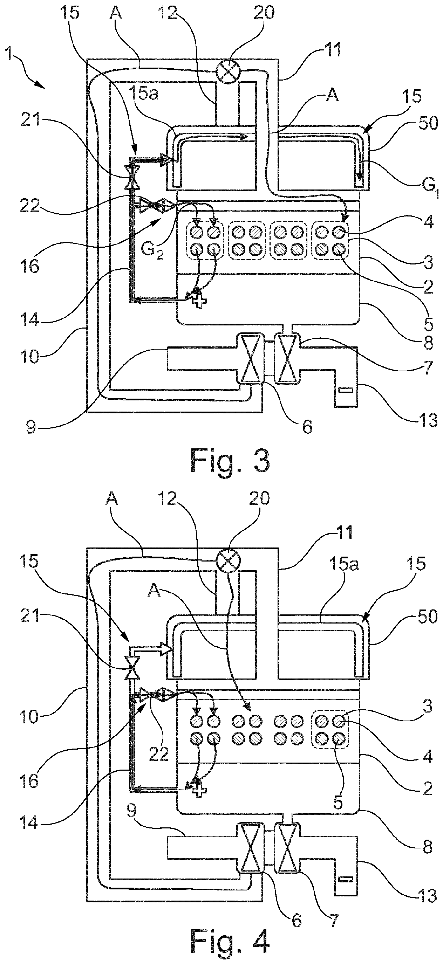

L'invention met en œuvre un nouveau procédé dont un exemple est illustré en figures 3 et 4. Ces figures illustrent également un exemple d'un système d'envoi d'air de suralimentation mettant en œuvre cet exemple de procédé.

Dans cet exemple, est illustré schématiquement un moteur 2 thermique avec quatre cylindres 3, chacun étant agencé avec deux soupapes d'admission 4 (en haut sur ces figures) et deux soupapes d'échappement 5 (en bas sur ces figures). L'invention peut cependant s'appliquer à des moteurs avec un nombre différent de cylindres et/ou de soupapes par cylindre.

L'air pris à l'extérieur du véhicule arrive par un conduit d'arrivée d'air 9, éventuellement en passant avant par un filtre à air (non représenté). Ce conduit d'arrivée d'air 9 débouche dans le compresseur 6 d'un turbocompresseur.

Le compresseur 6 comprime l'air et l'envoie dans conduit principal 10, qui véhicule cet air de suralimentation jusqu'à une connexion à deux circuits de circulation d'air de suralimentation.

Ici, le premier circuit d'air de suralimentation, ci-après premier circuit d'air 11, est connecté directement au moteur 2, de manière à former une communication aéraulique jusqu'aux soupapes d'admission 4, sans passer par un refroidisseur.

En revanche, le deuxième circuit d'air de suralimentation, ci-après circuit d'air 12, est connecté à un refroidisseur 50, de manière à former une communication aéraulique jusqu'au refroidisseur 50, passant à l'intérieur du refroidisseur 50, notamment entre des plaques du refroidisseur 50, jusqu'aux soupapes d'admission 4.

Les soupapes d'échappement 5 débouchent dans une portion haute pression 8. Cette portion haute pression 8 est en communication aéraulique avec la turbine 7 du turbocompresseur, qui elle-même tourne solidairement du compresseur 6, de manière à aspirer les gaz de combustion, encore appelés gaz d'échappement, et les envoyer dans un circuit d'échappement 13, qui les achemine jusqu'à une sortie d'un pot d'échappement, en passant éventuellement par des organes de traitement de ces gaz de combustion, de manière à diminuer la quantité de polluants contenus dans ces gaz.

Le circuit d'échappement 13 en aval de la turbine 7 forme une portion basse pression, par comparaison à la portion haute pression 8. Par exemple, la pression dans le circuit d'échappement peut être de 1 bar.

La connexion entre le conduit principal 10 et les circuits d'air 11, 12 comprend des moyens de sélection de l'un des circuits d'air 11, 12.

Dans l'exemple illustré, ces moyens de sélection comprennent une vanne trois voies 20 comprenant :
- une voie d'entrée reliée au conduit principal 10,
- une première voie de sortie reliée au premier circuit d'air 11,
- une deuxième voie de sortie reliée au deuxième circuit d'air 12,
- un sélecteur permettant d'ouvrir l'une des voies de sortie en fermant l'autre des voies de sortie, et vice versa.

Ainsi dans un exemple de procédé d'envoi d'air de suralimentation dans le moteur 2, cela permet de mettre en œuvre une étape de préchauffage, illustrée en figure 3, puis une étape de refroidissement, illustrée en figure 4.

L'étape de préchauffage est mise en œuvre au démarrage du moteur 2. La vanne trois voies 20 est pilotée de manière à fermer le deuxième circuit d'air 12 et à ouvrir le premier circuit d'air 11. Ainsi, la circulation de l'air de suralimentation A au travers du refroidisseur 50 est coupée, et se fait directement vers les cylindres 3 du moteur 2, sans passer par le refroidisseur 50.

Ensuite lorsqu'un signal de changement d'étape survient, la vanne trois voies 20 est pilotée de manière à fermer le premier circuit d'air 11 et à ouvrir le deuxième circuit d'air 12. Ainsi, la circulation de l'air de suralimentation A au travers du refroidisseur 50 est rétablie. L'air de suralimentation passe ainsi dans le refroidisseur 50 avant d'entrer dans les cylindres 3. A l'intérieur du refroidisseur 50, l'air de suralimentation échange des calories avec le circuit de refroidissement du refroidisseur, notamment avec ses plaques.

L'étape de préchauffage et l'étape de refroidissement étant successives, elles permettent de commencer à alimenter le moteur 2 en comburant avec de l'air chaud avant que le moteur et les éléments du compartiment moteur montent en température. Ce qui, comme exposé ci-avant, est particulièrement avantageux pour un véhicule en environnement froid, notamment à des températures inférieures à -10°C.

Le signal de changement peut être de différentes sortes.

Ce signal de changement peut par exemple être l'expiration d'une durée de consigne à compter du démarrage. Par exemple, une durée que le constructeur a déterminée comme étant le temps nécessaire pour que le refroidisseur 50 atteigne une température de consigne, de manière à ce que lorsque l'air de suralimentation circule dans le refroidisseur il ressorte à une température supérieure à un seuil de température, par exemple la température de condensation de l'humidité contenue dans l'air de suralimentation. Ce seuil de température peut par exemple être une valeur supérieure ou égale à 35°C.

Le signal de changement peut également être directement l'atteinte de cette température de consigne. Par exemple, une sonde thermique peut être agencée pour mesurer la température des parois d'un carter du refroidisseur 50 ou à l'intérieur d'un chemin de circulation d'air de suralimentation à l'intérieur du refroidisseur 50. Lorsque la sonde mesure que la température de consigne est atteinte, on passe alors à l'étape de refroidissement.

Le pilotage de la vanne trois voies 20 peut être réalisé par un processeur relié à un moyen d'établissement du signal de changement d'étape, tel que la temporisation ou la sonde thermique mentionnées ci-dessus.

Ce procédé permet de diminuer le risque d'envoi d'eau condensée dans le moteur 2 et améliore la combustion dans le moteur 2.

Il est aussi possible d'établir le seuil de température à la température idéale de combustion par exemple, entre 40 et 50°C.

Selon l'invention, pour améliorer davantage le procédé, le système 1 comprend également un premier circuit de circulation de gaz de combustion 15 permettant de faire circuler les gaz de combustion au moins en partie autour et/ou dans le refroidisseur 50 pour réchauffer ce dernier au démarrage. Ce premier circuit de circulation de gaz de combustion 15 est appelé ci-après circuit de réchauffage 15.

Pour cela, selon l'exemple de réalisation illustré en figures 3 et 4, un conduit primaire 14 est connecté d'un côté à la portion haute pression 8 et de l'autre à une première vanne deux voies 21, elle-même reliée au circuit de réchauffage 15. Ce dernier se prolonge en partie à l'intérieur du refroidisseur 50 en contact thermique avec ses masses métalliques. Ce circuit de réchauffage 15 est distinct du deuxième circuit d'air 12.

Ainsi, lors de l'étape de préchauffage, comme illustré en figure 3, la première vanne deux voies 21 est ouverte, de sorte que les gaz de combustion à haute pression viennent remplir une portion 15a du circuit de réchauffage 15 agencée dans le refroidisseur 50, ci-après portion de réchauffage 15a. Ainsi, cela permet d'accélérer fortement la montée en température des masses métalliques du refroidisseur 50 et de passer plus vite à l'étape de refroidissement. Le moteur 2 atteint ainsi son fonctionnement optimal plus rapidement. Par ailleurs, les gaz d'échappement sont directement mis à profit, sans avoir recours à une source de chaleur distincte.

Dans cet exemple, la portion de réchauffage 15a comprend uniquement une entrée des gaz de combustion et est donc dépourvue de sortie. Les gaz de combustion ont donc à l'intérieur du refroidisseur 50 une circulation G1 quasistagnante.

En parallèle, le système comprend également selon l'invention un deuxième circuit de circulation de gaz de combustion 16. Ce dernier est connecté d'un côté via une deuxième vanne deux voies 22 au circuit primaire 14 et de l'autre aux cylindres 3 au niveau des soupapes d'admission 4. Ce deuxième circuit de circulation de gaz de combustion 16 permet ainsi une recirculation G2 des gaz de combustion dans les cylindres 3 ; il est dénommé ci-après circuit RGE 16, pour Recirculation des Gaz d'Echappement.

La recirculation G2 des gaz peut avoir lieu lors de l'étape de préchauffage. Pour cela, la deuxième vanne deux voies 22 peut être partiellement fermée pour diminuer son débit, favorisant ainsi le passage des gaz de combustion dans le circuit de réchauffage 15. Cette vanne-ci 22 peut également être fermée lors de l'étape de préchauffage.

Lors du passage à l'étape de refroidissement, comme illustré en figure 4, la première vanne deux voies 21 est fermée et la deuxième vanne deux voies 22 est ouverte, ou davantage ouverte si elle était à débit réduit. La recirculation G2 des gaz de combustion est alors mise en œuvre dans le circuit RGE 16, mais pas dans le circuit de réchauffage 15.

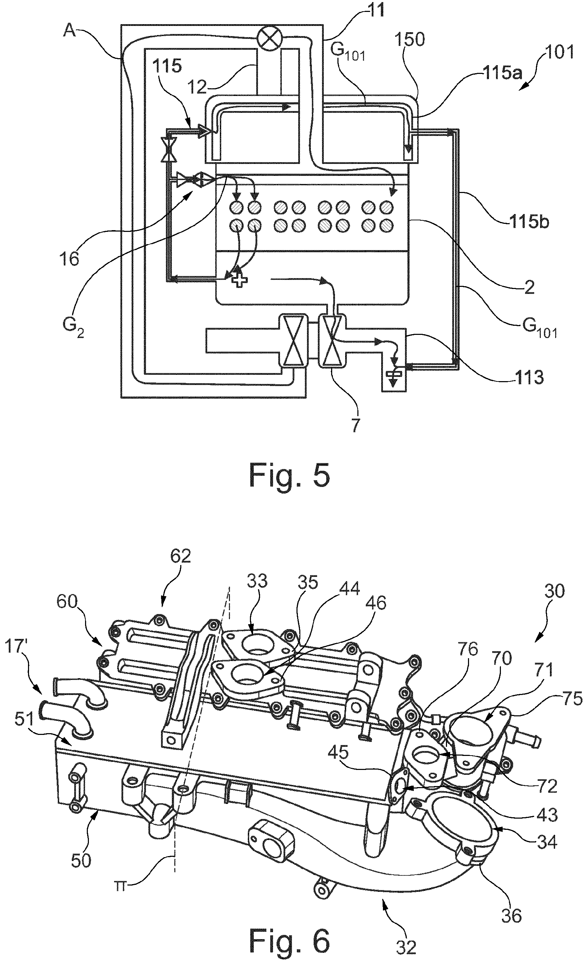

La figure 5 illustre une variante des figures 3 et 4, dans laquelle le système 101 d'envoi d'air de suralimentation diffère seulement par son circuit de réchauffage 115. Les circuits d'air 11, 12 et le circuit RGE 16 sont ici identiques à ceux des figures 3 et 4 ; ils ne sont pas donc pas davantage détaillés ici et conservent les mêmes références.

Ici, le circuit de réchauffage 115 participe à une autre boucle de circulation G101 des gaz de combustion. Pour cela, sa portion de réchauffage 115a comprend une sortie connectée à une portion de renvoi 115b, elle-même connecté à la portion basse pression dans le circuit d'échappement 113, en aval de la turbine 7 du turbocompresseur.

Ce différentiel de pression entre la portion basse pression et la portion haute pression 8 permet une circulation G101 continue des gaz de combustion dans le refroidisseur 50, améliorant son réchauffement, lors de l'étape de préchauffage.

Les figures 6 à 8 illustrent un exemple de répartiteur 30 de gaz permettant de répartir les gaz de combustion et l'air comme dans le système 1 des figures 3 et 4.

Dans cet exemple, le refroidisseur 50 est intégré avec le répartiteur 30 en un unique dispositif.

Le répartiteur 30 comprend un côté de montage 62 comprenant des brides de montage 63 et des bouches de répartition 40 débouchant dans la zone C où la culasse est destinée à être montée. Ces brides de montage 63 sont destinées à être montées sur la culasse du moteur 2. Ces bouches de répartition 40 sont agencées pour être montées chacune en vis-à-vis d'un cylindre 3, en particulier d'une soupape d'admission, de manière à ce que tout gaz présent dans ces bouches de répartition 40 soit aspiré dans le cylindre correspondant, à l'ouverture de ses soupapes d'admission.

Dans ce répartiteur 30, se termine les circuits d'air 11, 12 et le circuit RGE 16, qui débouchent tous dans les différentes bouches de répartition 40.

Le répartiteur 30 comprend quatre entrées de gaz distinctes de respectivement quatre chemins de gaz distinctes:
- une première et une deuxième entrées d'air 33, 34 de suralimentation distinctes, formant respectivement les entrées d'un premier et d'un deuxième chemin de circulation d'air 31, 32 distincts,
- une première et une deuxième entrées de gaz de combustion 43, 44 distinctes, formant respectivement les entrées d'un premier et d'un deuxième chemin de circulation de gaz de combustion 41, 42 distincts.

Le répartiteur 30 comprend un bloc de répartition 60, comprenant le premier chemin de circulation d'air 31, comprenant un premier conduit 31a connecté d'un côté directement à la première entrée d'air 33 et se divisant de l'autre en différentes conduites 31b connectées directement aux différentes bouches de répartition 40, de manière à relier ces dernières à la première entrée d'air 33.

La première entrée d'air 33 est formée dans une bride 35 destinée à être reliée à la première voie de sortie de la vanne trois voies 20 du système 1. Ainsi, le premier chemin de circulation d'air forme la portion terminale du premier circuit d'air 11.

Selon l'invention, comme ici, le bloc de répartition 60 peut comprendre le deuxième chemin de circulation de gaz de combustion 42, formant le chemin de recirculation du répartiteur, son entrée, à savoir la deuxième entrée de circulation de gaz de combustion 44, formant l'entrée de recirculation du répartiteur 30.

Ce chemin de recirculation, ci-après chemin RGE 42, comprend un deuxième conduit 42a, par exemple comme ici parallèle au premier conduit 31a. Ce deuxième conduit 42a est connecté d'un côté directement à l'entrée de recirculation, ci-après entrée RGE 44, et se divise de l'autre côté en différentes conduites 42b connectées directement aux différentes bouches de répartition 40, de manière à relier ces dernières à l'entrée RGE 44.

L'entrée RGE 44 est formée dans une bride 46 destinée à être reliée à la deuxième vanne deux voies 22 du système 1. Ainsi le chemin RGE 42 forme la portion terminale du circuit RGE 16.

Le refroidisseur 50 est ici une partie du répartiteur 30 et comprend une cloison commune 53. Le refroidisseur 50 comprend ainsi un carter 51 formé par un boitier 54 et la cloison commune 53. Ce carter 51 délimite une cavité 52 à l'intérieur de laquelle sont agencées des plaques, non représentées, dans lesquelles circule un fluide de refroidissement, formant ainsi un circuit de refroidissement 17, dont l'entrée et la sortie sont visibles en figure 6.

La cavité 52 est reliée d'un côté à la deuxième entrée d'air 34. De l'autre côté, la cloison commune 53 comprend des ouvertures 38 de la cavité 52 débouchant dans les bouches de répartition 40, de manière à former une partie du deuxième chemin de circulation d'air 32 entre ces plaques.

La deuxième entrée d'air 34 est formée dans une bride 36 destinée à être reliée à la deuxième voie de sortie de la vanne trois voies 20 du système 1. Ainsi le deuxième chemin de circulation d'air 32 forme la portion terminale du deuxième circuit d'air 12.

Le boitier 54 du carter 51 présente des parois comprenant dans leur épaisseur un espace formant une partie du premier chemin de circulation de gaz 41, ci-après chemin de réchauffage. Ce chemin de réchauffage 41 présente une unique ouverture formée dans une bride 45, destinée à être connectée à la première vanne deux voies 21 du système 1. Cette ouverture forme la première entrée de gaz de combustion 43, dite entrée de réchauffage. Ainsi le chemin de réchauffage 41 forme la portion terminale du circuit de réchauffage 15.

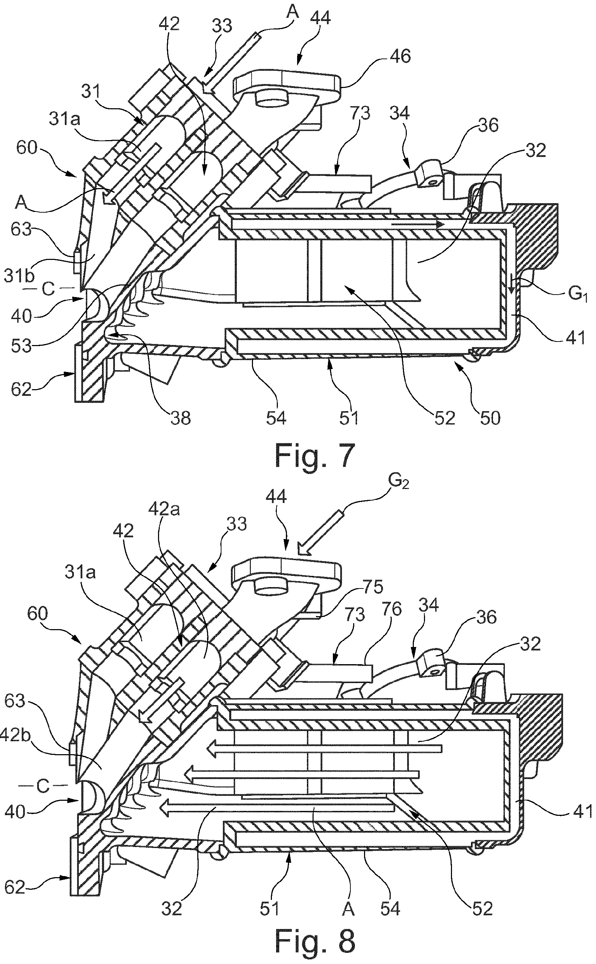

Comme illustré en figure 7, lors de l'étape de préchauffage, la circulation de l'air de suralimentation A est établie uniquement directement vers les bouches de répartition 40, évitant ainsi d'être refroidis par le refroidisseur 50. De plus, au moins une partie des gaz de combustion suivent une circulation G1 dans les parois du carter 51, permettant de chauffer celles-ci directement.

Une fois la température de consigne atteinte, le système passe à l'étape de refroidissement, illustrée en figure 8. La circulation de l'air de suralimentation A est réalisée alors uniquement dans le deuxième chemin de circulation d'air 32. La circulation des gaz de combustion G2 n'a alors lieu que dans le chemin RGE 42.

Dans cet exemple, le répartiteur comprend une conduite intermédiaire 70, avec une entrée intermédiaire 71 et une sortie intermédiaire 72, dont les brides 75, 76 peuvent être respectivement connectées à la deuxième vanne deux voies 22 et à un conduit d'échange échangeant de la chaleur avec un organe de refroidissement des gaz de combustion, non représenté. Ce conduit d'échange est à son tour fixé à la bride 46 de l'entrée RGE 44.

A noter que selon des réalisations non représentées, le système peut être agencé avec un répartiteur et un refroidisseur formés en deux dispositif séparés et à distance. Dans un tel cas la cavité du carter est reliée aux bouches de répartition via des conduites.

## Revendications

1. Procédé d'envoi d'air de suralimentation dans un moteur (2) thermique avec des cylindres (3), le moteur étant associé à un refroidisseur (50) d'air de suralimentation provenant d'un compresseur (6), comprenant les étapes suivantes :
- une étape de préchauffage, dans laquelle au démarrage du moteur, la circulation de l'air de suralimentation au travers du refroidisseur (50) est coupée et l'air de suralimentation est dirigé directement dans les cylindres (3) du moteur, puis
- une étape de refroidissement, dans laquelle la circulation de l'air de suralimentation au travers du refroidisseur (50) est rétablie, de manière à ce que l'air de suralimentation passe dans le refroidisseur avant d'entrer dans les cylindres (3),
**caractérisé en ce que** :
- lors de l'étape de préchauffe, on amène au moins une partie des gaz de combustion sortant des cylindres (3) autour et/ou dans le refroidisseur (50), de manière à ce que ces gaz de combustion échangent des calories avec le refroidisseur,
- lors de l'étape de refroidissement, la circulation des gaz de combustion autour et/ou dans le refroidisseur (50) est interrompue.

2. Procédé selon la revendication 1, dans lequel l'étape de refroidissement est mise en œuvre :
- lorsque la température de l'air de suralimentation atteint ou dépasse une température de consigne, ou
- au bout d'une durée de consigne à compter du démarrage du moteur.

3. Procédé selon la revendication 1 ou 2, dans lequel les gaz de combustion circulent autour et/ou dans le refroidisseur, puis rejoignent une portion basse pression d'un circuit d'échappement (113) où la pression est moins élevée qu'en sortie (8) des cylindres (3).

4. Système (1 ; 101) d'envoi d'air de suralimentation dans un moteur (2) thermique avec des cylindres (3) pour la mise en œuvre d'un procédé selon l'une des revendications précédentes, comprenant :
- un répartiteur (30) de gaz d'un moteur thermique, comprenant des bouches de répartition (40) destinées à être mises respectivement en communication aéraulique avec des cylindres (3) correspondants d'un moteur (2),
- un premier circuit de circulation d'air (11) de suralimentation débouchant dans les bouches de répartition (40),
- un deuxième circuit de circulation d'air (12) de suralimentation débouchant dans les bouches de répartition (40), ledit deuxième circuit de circulation d'air étant distinct dudit premier circuit de circulation d'air,
- un refroidisseur (50) d'air de suralimentation provenant d'un compresseur, ledit deuxième circuit de circulation d'air (12) et le refroidisseur (50) étant agencés de manière à échanger de la chaleur en amont des bouches de répartition (40), et ledit premier circuit de circulation d'air (11) étant agencé à l'écart du refroidisseur,
- des moyens de sélection (20) permettant d'ouvrir ou de fermer sélectivement l'arrivée d'air de suralimentation dans ledit premier circuit de circulation d'air (11) ou dans ledit deuxième circuit de circulation d'air (12),
- un premier circuit de circulation de gaz de combustion (15) distinct desdits circuits de circulation d'air (11, 12), ledit premier circuit de circulation de gaz de combustion étant agencé de manière à échanger de la chaleur avec le refroidisseur (50),
- un deuxième circuit de circulation de gaz de combustion (16) débouchant dans les bouches de répartition (40), ledit deuxième circuit de circulation de gaz de combustion étant distinct desdits circuits de circulation d'air (11, 12) et dudit premier circuit de circulation de gaz de combustion (15 ; 115), ledit deuxième circuit de circulation de gaz étant à l'écart du refroidisseur (50).

5. Répartiteur (30) de gaz d'un moteur thermique, le répartiteur comprenant:
- des bouches de répartition (40) destinées à être mises respectivement en communication aéraulique avec les cylindres (3) correspondants d'un moteur (2),
- au moins une première entrée d'air (33) de suralimentation,
- au moins une deuxième entrée d'air (34) de suralimentation, distincte de ladite première entrée d'air,
- un premier chemin de circulation d'air (31) reliant ladite première entrée d'air aux bouches de répartition (40),
- au moins une entrée de gaz de combustion, dite entrée de recirculation (44),
- un chemin de circulation de gaz de combustion, dit chemin de recirculation (42), reliant ladite entrée de recirculation (44) aux bouches de répartition (40), le chemin de recirculation étant distinct du premier chemin de circulation d'air (31), l'entrée de recirculation étant distincte de la première et de la deuxième entrée d'air (33, 34),
- un refroidisseur (50) d'air de suralimentation, ledit premier chemin de circulation d'air (31) étant agencé à l'écart du refroidisseur,
- un deuxième chemin de circulation d'air (32) reliant ladite deuxième entrée d'air (34) aux bouches de répartition (40) et distinct dudit premier chemin de circulation d'air (31), ledit deuxième chemin de circulation d'air (32) et le refroidisseur étant agencés de manière à échanger de la chaleur,
- au moins une autre entrée de gaz de combustion, dite entrée de réchauffage (43),
- un autre chemin de circulation de gaz de combustion, dit chemin de réchauffage (41), relié à l'entrée de réchauffage (43), ledit chemin de réchauffage et ladite entrée de réchauffage étant distincts respectivement desdits chemin de circulation d'air (31, 32) et de leurs entrées d'air (33, 34), ledit chemin de réchauffage (41) étant agencé de manière à échanger de la chaleur avec le refroidisseur (50).

6. Répartiteur (30) selon la revendication 5, comprenant un bloc de répartition (60) comprenant un premier conduit (31a) formant au moins une portion du premier chemin de circulation d'air (31) et un deuxième conduit (42a) formant au moins une portion du chemin de recirculation (42).

7. Répartiteur (30) selon la revendication 5 ou 6, dans lequel le refroidisseur (50) comprend un carter (51) et un circuit de refroidissement (17) au contact dudit deuxième chemin de circulation d'air (32) à l'intérieur du carter, le carter présentant des parois comprenant dans leur épaisseur au moins une partie dudit chemin de réchauffage (41).

8. Répartiteur (30) selon la revendication 7, dans lequel le carter (51) délimite une cavité (52) et dans lequel le circuit de refroidissement (17) comprend des plaques dans lesquelles circule un fluide de refroidissement, les plaques étant agencées dans la cavité, la cavité étant reliée d'un côté à ladite deuxième entrée d'air (34) et de l'autre aux bouches de répartition (40) de manière à former au moins une partie dudit deuxième chemin de circulation d'air (32) entre ces plaques.

9. Véhicule comprenant :
- un système (1) selon la revendication 4,
- un compresseur (9) connecté aux moyens de sélection (20) de manière à envoyer à ces derniers l'air de suralimentation.

## Patentansprüche

1. Verfahren zum Zuführen von Ladeluft in einen Wärmekraftmotor (2) mit Zylindern (3), wobei der Motor einem Kühler (50) von Ladeluft zugeordnet ist, die von einem Kompressor (6) kommt, das die folgenden Schritte enthält:
- einen Vorwärmschritt, bei dem beim Anlassen des Motors die Zirkulation der Ladeluft durch den Kühler (50) hindurch unterbrochen und die Ladeluft direkt in die Zylinder (3) des Motors geleitet wird, dann
- einen Kühlschritt, bei dem die Zirkulation der Ladeluft durch den Kühler (50) hindurch wiederhergestellt wird, damit die Ladeluft den Kühler durchquert, ehe sie in die Zylinder (3) eintritt,
**dadurch gekennzeichnet, dass**:
- im Vorwärmschritt mindestens ein Teil der aus den Zylindern (3) austretenden Brenngase um und/oder in den Kühler (50) gebracht werden, damit diese Brenngase mit dem Kühler Kalorien austauschen,
- im Kühlschritt die Zirkulation der Brenngase um den und/oder im Kühler (50) unterbrochen wird.

2. Verfahren nach Anspruch 1, wobei der Kühlschritt durchgeführt wird:
- wenn die Temperatur der Ladeluft eine Solltemperatur erreicht oder überschreitet, oder
- am Ende einer Solldauer ab dem Anlassen des Motors.

3. Verfahren nach Anspruch 1 oder 2, wobei die Brenngase um den und/oder im Kühler zirkulieren, dann einen Niederdruckteil eines Abgaskreislaufs (113) erreichen, wo der Druck weniger hoch ist als am Ausgang (8) der Zylinder (3).

4. System (1; 101) zum Zuführen von Ladeluft in einen Wärmekraftmotor (2) mit Zylindern (3) zur Durchführung eines Verfahrens nach einem der vorhergehenden Ansprüche, das enthält:
- einen Verteiler (30) von Gas eines Wärmekraftmotors, der Verteileröffnungen (40) enthält, die dazu bestimmt sind, mit entsprechenden Zylindern (3) eines Motors (2) in Luftzirkulationsverbindung gebracht zu werden,
- einen ersten Ladeluftzirkulationskreis (11), der in die Verteileröffnungen (40) mündet,
- einen zweiten Ladeluftzirkulationskreis (12), der in die Verteileröffnungen (40) mündet, wobei der zweite Luftzirkulationskreis sich vom ersten Luftzirkulationskreis unterscheidet,
- einen Kühler (50) von Ladeluft, die von einem Kompressor kommt, wobei der zweite Luftzirkulationskreis (12) und der Kühler (50) so eingerichtet sind, dass sie Wärme stromaufwärts vor den Verteileröffnungen (40) austauschen, und der erste Luftzirkulationskreis (11) in Abstand zum Kühler eingerichtet ist,
- Auswahleinrichtungen (20), die es ermöglichen, die Ladeluftzufuhr in den ersten Luftzirkulationskreis (11) oder in den zweiten Luftzirkulationskreis (12) selektiv zu öffnen oder zu schließen,
- einen ersten Brenngaszirkulationskreis (15), der sich von den Luftzirkulationskreisen (11, 12) unterscheidet, wobei der erste Brenngaszirkulationskreis so eingerichtet ist, dass er Wärme mit dem Kühler (50) austauscht,
- einen zweiten Brenngaszirkulationskreis (16), der in die Verteileröffnungen (40) mündet, wobei der zweite Brenngaszirkulationskreis sich von den Luftzirkulationskreisen (11, 12) und vom ersten Brenngaszirkulationskreis (15; 115) unterscheidet, wobei der zweite Gaszirkulationskreis einen Abstand zum Kühler (50) hat.

5. Verteiler (30) von Gasen eines Wärmekraftmotors, wobei der Verteiler enthält:
- Verteileröffnungen (40), die dazu bestimmt sind, mit den entsprechenden Zylindern (3) eines Motors (2) in Luftzirkulationsverbindung gebracht zu werden,
- mindestens einen ersten Ladelufteingang (33),
- mindestens einen zweiten Ladelufteingang (34), der sich vom ersten Lufteingang unterscheidet,
- einen ersten Luftzirkulationspfad (31), der den ersten Lufteingang mit den Verteileröffnungen (40) verbindet,
- mindestens einen Brenngaseingang, Rezirkulationseingang (44) genannt,
- einen Brenngaszirkulationspfad, Rezirkulationspfad (42) genannt, der den Rezirkulationseingang (44) mit den Verteileröffnungen (40) verbindet, wobei der Rezirkulationspfad sich vom ersten Luftzirkulationspfad (31) unterscheidet, wobei der Rezirkulationseingang sich vom ersten und vom zweiten Lufteingang (33, 34) unterscheidet,
- einen Ladeluftkühler (50), wobei der Luftzirkulationspfad (31) in Abstand zum Kühler eingerichtet ist,
- einen zweiten Luftzirkulationspfad (32), der den zweiten Lufteingang (34) mit den Verteileröffnungen (40) verbindet und sich vom ersten Luftzirkulationspfad (31) unterscheidet, wobei der zweite Luftzirkulationspfad (32) und der Kühler so eingerichtet sind, dass sie Wärme austauschen,
- mindestens einen weiteren Brenngaseingang, Wiedererwärmungseingang (43) genannt,
- einen weiteren Brenngaszirkulationspfad, Wiedererwärmungspfad (41) genannt, verbunden mit dem Wiedererwärmungseingang (43), wobei der Wiedererwärmungspfad und der Wiedererwärmungseingang sich von den Luftzirkulationspfaden (31, 32) bzw. ihren Lufteingängen (33, 34) unterscheiden, wobei der Wiedererwärmungspfad (41) so eingerichtet ist, dass er mit dem Kühler (50) Wärme austauscht.

6. Verteiler (30) nach Anspruch 5, der einen Verteilerblock (60) enthält, der einen ersten Kanal (31a), der mindestens einen Abschnitt des ersten Luftzirkulationspfads (31) bildet, und einen zweiten Kanal (42a) enthält, der mindestens einen Abschnitt des Rezirkulationspfads (42) bildet.

7. Verteiler (30) nach Anspruch 5 oder 6, wobei der Kühler (50) ein Gehäuse (51) und einen Kühlkreislauf (17) in Kontakt mit dem zweiten Luftzirkulationspfad (32) im Inneren des Gehäuses enthält, wobei das Gehäuse Wände aufweist, die in ihrer Dicke mindestens einen Teil des Wiedererwärmungspfads (41) enthalten.

8. Verteiler (30) nach Anspruch 7, wobei das Gehäuse (51) einen Hohlraum (52) begrenzt, und wobei der Kühlkreislauf (17) Platten enthält, in denen ein Kühlfluid zirkuliert, wobei die Platten im Hohlraum eingerichtet sind, wobei der Hohlraum einerseits mit dem zweiten Lufteingang (34) und andererseits mit den Verteileröffnungen (40) verbunden ist, um mindestens einen Teil des zweiten Luftzirkulationspfads (32) zwischen diesen Platten zu bilden.

9. Fahrzeug, das enthält:
- ein System (1) nach Anspruch 4,
- einen Kompressor (9), der mit den Auswahleinrichtungen (20) verbunden ist, um diesen Ladeluft zuzuführen.

## Claims

1. Method for sending charge air into a heat engine (2) comprising cylinders (3), the engine being connected to a cooler (50) for charge air coming from a compressor (6), comprising the following steps:
- a preheating step in which, when the engine is started up, the circulation of charge air through the cooler (50) is stopped and the charge air is sent directly into the cylinders (3) of the engine, then
- a cooling step in which the circulation of charge air through the cooler (50) is restored, such that the charge air passes into the cooler before entering the cylinders (3),
**characterized in that**
- during the preheating step, at least one portion of the combustion gases leaving the cylinders (3) is conducted around and/or into the cooler (50) such that these combustion gases exchange calories with the cooler,
- during the cooling step, the circulation of combustion gases around and/or into the cooler (50) is interrupted.

2. Method according to Claim 1, wherein the cooling step is implemented:
- when the temperature of the charge air reaches or exceeds a reference temperature, or
- at the end of a reference time period taken from the start-up of the engine.

3. Method according to Claim 1 or 2, wherein the combustion gases circulate around and/or in the cooler, then pass into a low pressure portion of an exhaust circuit (113) where the pressure is lower than at the outlet (8) of the cylinders (3).

4. System (1; 101) for sending charge air into a heat engine (2) comprising cylinders (3) in order to implement a method according to one of the preceding claims, comprising:
- a gas intake manifold (30) of a heat engine, comprising distribution orifices (40) designed to be placed respectively in aeraulic communication with corresponding cylinders (3) of an engine (2),
- a first charge air flow circuit (11) leading into the distribution orifices (40),
- a second charge air flow circuit (12) leading into the distribution orifices (40), said second air flow circuit being separate from said first air flow circuit,
- a cooler (50) for charge air coming from a compressor, said second air flow circuit (12) and the cooler (50) being arranged so as to exchange heat upstream of the distribution orifices (40), and said first air flow circuit (11) being arranged separately from the cooler,
- selection means (20), making it possible to open or close selectively the intake of charge air into said first air flow circuit (11) or into said second air flow circuit (12),
- a first combustion gas flow circuit (15) which is separate from said air flow circuits (11, 12), said first combustion gas flow circuit being arranged so as to exchange heat with the cooler (50),
- a second combustion gas flow circuit (16) leading into the distribution orifices (40), said second combustion gas flow circuit being separate from said air flow circuits (11, 12) and said first combustion gas flow circuit (15; 115), said second gas flow circuit being separate from the cooler (50).

5. Gas intake manifold (30) of a heat engine, the intake manifold comprising:
- distribution orifices (40) which are designed to be placed respectively in aeraulic communication with the corresponding cylinders (3) of an engine (2),
- at least one first charge air inlet (33),
- at least one second charge air inlet (34) which is separate from said first air inlet,
- a first air flow path (31) connecting said first air inlet to the distribution orifices (40),
- at least one combustion gas inlet, the so-called recirculation inlet (44),
- a combustion gas flow path, the so-called recirculation path (42), connecting said recirculation inlet (44) to the distribution orifices (40), the recirculation path being separate from the first air flow path (31), the recirculation inlet being separate from the first and the second air inlet (33, 34),
- a charge air cooler (50), said first air flow path (31) being arranged separately from the cooler,
- a second air flow path (32) connecting said second air inlet (34) to the distribution orifices (40) and separate from said first air flow path (31), said second air flow path (32) and the cooler being arranged so as to exchange heat,
- at least one further combustion gas inlet, the so-called reheating inlet (43),
- a further combustion gas flow path, the so-called reheating path (41), connected to the reheating inlet (43), said reheating path and said reheating inlet being separate respectively from said air flow path (31, 32) and the air inlets (33, 34) thereof, said reheating path (41) being arranged so as to exchange heat with the cooler (50) .

6. Intake manifold (30) according to Claim 5, comprising an intake manifold block (60) comprising a first conduit (31a) forming at least one portion of the first air flow path (31) and a second conduit (42a) forming at least one portion of the recirculation path (42) .

7. Intake manifold (30) according to Claim 5 or 6, wherein the cooler (50) comprises a casing (51) and a cooling circuit (17) in contact with said second air flow path (32) inside the casing, the casing having walls comprising within their thickness at least one portion of said reheating path (41).

8. Intake manifold (30) according to Claim 7, wherein the casing (51) delimits a cavity (52) and wherein the cooling circuit (17) comprises plates in which a coolant circulates, the plates being arranged in the cavity, the cavity being connected, on the one hand, to said second air inlet (34) and, on the other hand, to the distribution orifices (40) so as to form at least one portion of said second air flow path (32) between these plates.

9. Vehicle comprising:
- a system (1) according to Claim 4,
- a compressor (9) connected to the selection means (20), so as to send the charge air thereto.
